**Europäisches Patentamt**

**European Patent Office**

**Office européen des brevets**

(19)

(11) Veröffentlichungsnummer: **0 221 270**
**B1**

(12) ## EUROPÄISCHE PATENTSCHRIFT

(45) Veröffentlichungstag der Patentschrift:
**15.11.89**

(51) Int. Cl.⁴: **H05B 7/06**, H05B 3/03

(21) Anmeldenummer: **86111678.8**

(22) Anmeldetag: **22.08.86**

(54) **Kontaktverbindung für die Kontaktelektrode eines Lichtbogen- oder Widerstands-Schmelzofens.**

(30) Priorität: **05.10.85  DE 3535689**

(43) Veröffentlichungstag der Anmeldung:
**13.05.87 Patentblatt 87/20**

(45) Bekanntmachung des Hinweises auf die Patenterteilung:
**15.11.89 Patentblatt 89/46**

(84) Benannte Vertragsstaaten:
**AT CH DE FR GB IT LI SE**

(56) Entgegenhaltungen:
**EP-A- 0 122 120**
**EP-A- 0 133 931**
**EP-A-00 588 17**
**US-A- 3 249 675**

(73) Patentinhaber: **MAN Gutehoffnungshütte
Aktiengesellschaft,
Bahnhofstrasse, 66 Postfach 11 02 40,
D-4200 Oberhausen 11(DE)**

(72) Erfinder: **Guido, Heinz, Albert Schweitzer Strasse 28,
D-4100 Duisburg 25(DE)**

## Beschreibung

Die Kontaktelektroden im Gleichstrom Lichtbogenofen (z.B. gemäß DE-PS 3l 06 74l bzw. korrespondierende EP-A1 0 058 817) unterliegen einem im Verhältnis zur Ofenherdausmauerung voreilenden Verschleiß. Da das Auswechseln einzelner Kontaktstäbe einen relativ großen Arbeitsaufwand bedeutet, ist man in der Praxis dazu übergegangen, in entsprechenden Zeitabständen alle Kontaktstäbe gemeinsam auszuwechseln.

Dieses Auswechseln geschieht vorzugsweise, indem die Bodenelektrode in einem Stück aus dem Ofengefäß herausgehoben und durch eine neue ersetzt wird. Für diesen Arbeitsgang war es bisher notwendig, die Stromkabel und die Einrichtungen für die Kühlmittelversorgung von der Bodenelektrode zu lösen.

Dieser Arbeitsweise haftet der Mangel an, daß die Stromkabel, bedingt durch ihr Gewicht, schwer handhabbar sind. Für größere Anlagen ist sogar Montagegerät notwendig. Darüber hinaus ist die Arbeit beschwerlich durch die Strahlungswärme des Ofenbodens.

Um die Arbeit zu vereinfachen und zu beschleunigen und um die Strapazen für das Personal zu mindern, wurde bereits vorgeschlagen, die Kontaktelektrode so zu gestalten, daß Bodenelektrode und Stromkabelterminal voneinander getrennt werden können und somit die Stromkabel und Kühlmittelversorgungsleitungen montiert verbleiben können.

Die Kontaktstelle stellt die Verbindung dar zwischen dem Stromkabelterminal und der Kontaktelektrode. Sie muß geeignet sein für die Leitung des elektrischen Stromes und sie muß das Kühlmittel in die Bodenelektrode weiterleiten.

Dies kann geschehen, indem der Stromkabelterminal befestigt wird am Ofengefäß und an seiner Oberseite eine Kontaktstelle erhält für die Verbindung zur Kontaktelektrode. Somit muß zum Ausbau der Kontaktelektrode nunmehr die Kontaktstelle zwischen Terminal und Kontaktelektrode gelöst werden. Stromkabel und Kühlmittelversorgungsleitungen verbleiben am Terminal, der selbst am Ofengefäß befestigt ist.

Aufgabe der Erfindung ist es, eine Kontaktverbindung zwischen der Kontaktelektrode und dem Versorgungsterminal eines Lichtbogen- oder Widerstandsofens zu schaffen, die einfach in ihrem konstruktiven Aufbau, leicht in der Handhabung ist und einen zuverlässigen Kontakt herstellt.

Diese Aufgabe wird erfindungsgemäß in der Weise gelöst, wie es in den Patentansprüchen angegeben wurde.

Die erfindungsgemäße Ausgestaltung der Kontaktverbindung erfüllt die zuvor genannte Aufgabe und zeichnet sich ferner dadurch aus, daß auch nach mehrmaligem Wechsel der Kontaktelektrode die Kontakteinrichtungen am Versorgungsterminal wiederverwendbar sind.

Ein Ausführungsbeispiel der Kontaktverbindung wird nachstehend anhand der schematischen Zeichnungen näher erläutert.

Es zeigen:

Fig. l einen Schnitt durch ein Lichtbogenofengefäß und

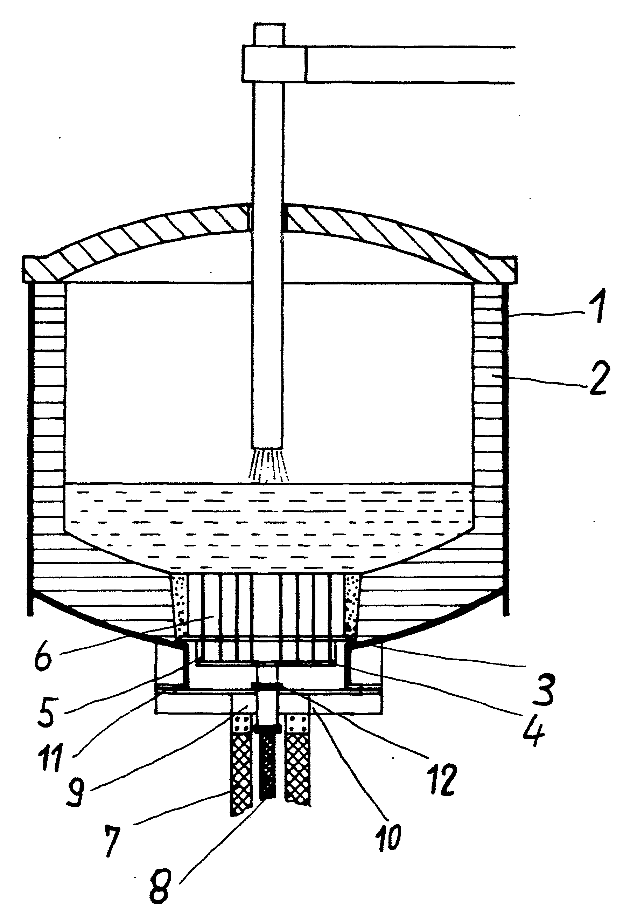

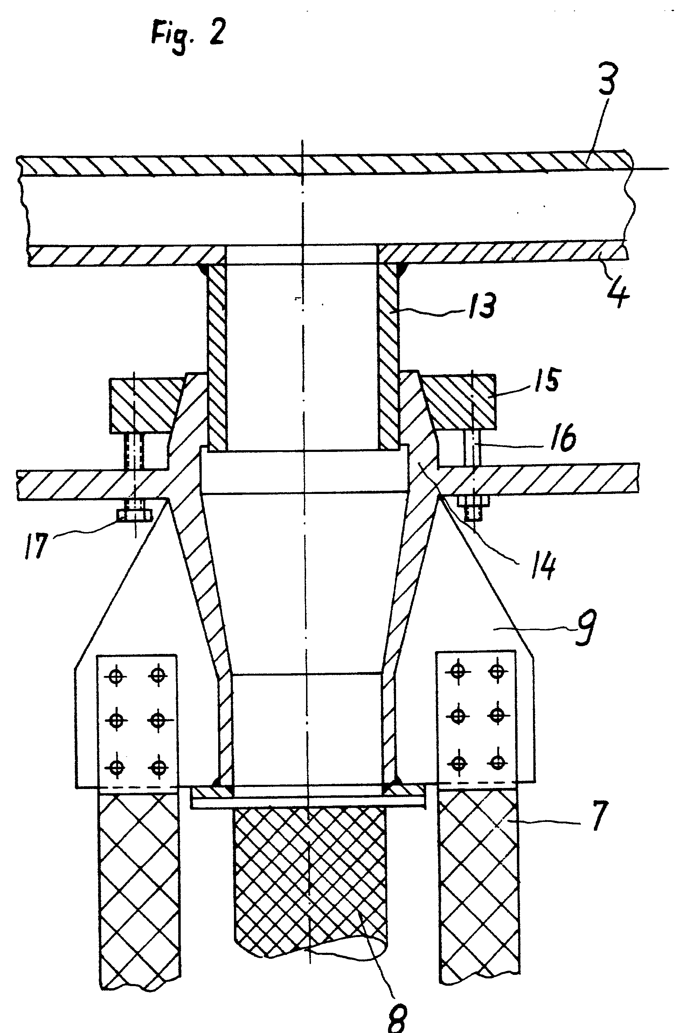

Fig. 2 einen Schnitt der Kontaktverbindung in vergrößertem Maßstab.

Fig. l zeigt das Ofengefäß l mit der im Innern befindlichen feuerfesten Ausmauerung 2. Im Zentrum des Ofengefäßbodens ist die Kontaktelektrode, bestehend aus Tragplatte 3, Basisplatte 4, Kontaktstäben 5 und feuerfester Ausstampfung 6, erkennbar. Die Stromkabel 7 und die Kühlmittelversorgungsleitungen 8 sind am Versorgungsterminal 9 befestigt. Unterhalb des Ofengefäßes ist ein Joch l0 angeordnet, das für die Aufnahme des Versorgungsterminals 9 eingerichtet ist. Zwischen dem Joch l0 und dem Ofengefäß ist eine Isolierung ll eingebaut.

Die Kontaktverbindung l2 (gem. Fig. l) ist als Einzelheit in Fig. 2 dargestellt. An der Basisplatte 4 ist ein Kontaktrohr l3 befestigt. Dieses Kontaktrohr l3 ragt in eine außen konische Kontakthülse l4. Eine Andrückscheibe l5 wird mittels Spannschrauben l6 auf die Kontakthülse gezogen und erzeugt den für einen Stromübergang notwendigen Kontaktdruck zwischen Kontaktrohr l3 und Kontakthülse l4. Zum Lösen der Andrückscheibe l5 werden Abdruckschrauben l7 vorgesehen.

## Patentansprüche

l. Kontaktverbindung zwischen der Kontaktelektrode und dem Versorgungsterminal für Strom- und Kühlmittelleitungen eines Lichtbogen- oder Widerstands-Schmelzofens,
dadurch gekennzeichnet,
daß an der Unterseite der Basisplatte (4) der Kontaktelektrode ein Kontaktrohr (l3) angeordnet ist, das in eine Kontakthülse (l4) am Versorgungsterminal eingreift, und daß die Kontakthülse (l4) mittels einer Andrückscheibe (l5) an das Kontaktrohr (l3) gepreßt ist.

2. Kontaktverbindung nach Anspruch l,
dadurch gekennzeichnet,
daß die Kontakthülse (l4) einen Außenkonus und die Andrückscheibe (l5) einen Innenkonus aufweist.

3. Kontaktverbindung nach den Ansprüchen l und 2,
dadurch gekennzeichnet,
daß die Preßkraft auf die Andrückscheibe mit Hilfe von Spannschrauben (l6) erzeugt wird.

4. Kontaktverbindung nach den Ansprüchen l und 2,
dadurch gekennzeichnet,
daß die Preßkraft auf die Andrückscheibe mit Hilfe von Keilen erzeugt wird.

## Claims

1. Contact connection between the contact electrode and the supply terminal for power and coolant lines of an arc or resistance smelting furnace, characterised in that there is on the underside of the base plate (4) of the contact electrode a contact pipe (13) which engages a contact sleeve (14) on the supply terminal, and in that the contact sleeve (14) is pressed against the contact pipe (13) by a pressure plate (15).

2. Contact connection according to Claim 1, characterised in that the contact sleeve (14) has an outer cone while the pressure plate (15) has an inner cone.

3. Contact connection according to Claims 1 and 2, characterised in that the pressing force is applied to the pressure plate by means of straining bolts (16).

4. Contact connection according to Claims 1 and 2, characterised in that the pressing force is applied to the pressure plate by means of wedges.

**Revendications**

1. Connexion entre l'électrode de contact et la borne d'alimentation pour les conduites d'alimentation électriques et les conduites d'alimentation en fluide de refroidissement d'un four de fusion à arc ou à résistances, connexion caractérisée en ce que sur la face inférieure de la plaque de base (4) de l'électrode de contact on a un tube de contact (13) qui pénètre dans une douille de contact (14) de la borne d'alimentation, et la douille de contact (14) est pressée contre le tube de contact (13) par une couronne de pression (15).

2. Connexion selon la revendication 1, caractérisée en ce que la douille de contact (14) comporte un cône extérieur une couronne de pression (13) avec un cône intérieur.

3. Connexion selon les revendications 1 et 2, caractérisée en ce que la force de pression de la couronne de pression est générée par des vis de serrage (16).

4. Connexion selon les revendications 1 et 2, caractérisée en ce que la force de pression sur la couronne de pression est créée par des coins.

Fig. 2